Europäisches Patentamt

**European Patent Office**

**Office européen des brevets**

(19)

(11) Veröffentlichungsnummer: **0 093 257**
**B1**

(12) **EUROPÄISCHE PATENTSCHRIFT**

(45) Veröffentlichungstag der Patentschrift:
07.01.87

(21) Anmeldenummer: 83102750.3

(22) Anmeldetag: 21.03.83

(51) Int. Cl.⁴: **B 08 B 15/04**, A 61 C 19/00

(54) Absaug- und Schutzhaube besonders für ein zahntechnisches Labor.

(30) Priorität: 30.04.82 DE 8212427 U

(43) Veröffentlichungstag der Anmeldung:
09.11.83 Patentblatt 83/45

(45) Bekanntmachung des Hinweises auf die Patenterteilung:
07.01.87 Patentblatt 87/2

(84) Benannte Vertragsstaaten:
AT BE CH DE FR GB IT LI NL SE

(56) Entgegenhaltungen:
DE - C - 423 479
DE - C - 527 639
US - A - 1 374 075

(73) Patentinhaber: Lobemeier, Horst,
Hardenbergstrasse 13, D-4720 Beckum (DE)

(72) Erfinder: Lobemeier, Horst, Hardenbergstrasse 13,
D-4720 Beckum (DE)

(74) Vertreter: Patentanwälte Schulze Horn und Hoffmeister,
Goldstrasse 36, D-4400 Münster (DE)

ACTORUM AG

**Beschreibung**

Die Erfindung betrifft eine Absaug- und Schutzhaube besonders für den Einsatz in einem zahntechnischen Labor mit einem Haubenteil, dessen geneigte Oberseite eine Sichtscheibe aufweist und über ein senkrechtes Wandteil mit einem Arbeitsboden verbunden ist, und dessen Seitenränder kragenförmig ausgebildet sind, und einem Absaugstutzen, der über eine Öffnung im Arbeitsboden an das Haubenteil angeschlossen ist.

Bei der Bearbeitung von Werkstücken in einem zahntechnischen Labor fallen Schleif- und Staubpartikel an. Sie stellen für das Personal nicht nur eine Belästigung, sondern durch ihren Gehalt an gesundheitsschädlichen Stoffen wie Beryllium, Nickel (in NE-Metallen) und Kunststoffen auch eine gesundheitliche Gefährdung dar. Trotz dieser Gefährdung werden vielfach nur einfache Absaugvorrichtungen eingesetzt, die keinen ausreichenden Schutz ermöglichen. Vorhandene Absaug- und Schutzhauben sind köperseitig offen und weisen eine Absaugvorrichtung auf, die zur Bedienungsperson hin gerichtet ist. Durch diese Anordnung wird ein ausreichender Staubschutz nicht erreicht. Nachteilig ist ferner, dass die zur schnellen Bearbeitung eines Werkstücks erforderliche Bewegungsfreiheit beeinträchtigt wird. Das Werkstück muss nach einem Bearbeitungsschritt zur Kontrolle des Passsitzes aus der Haube genommen und auf ein Modell gesetzt werden. Bevor es fertiggestellt ist, kann diese Anpassung 30–40 mal erforderlich sein. Bei einer körperseitig offenen Schutzhaube bereitet die Anpassung Umstände, da das Werkstück um die Haube herum zum Modell geführt werden muss. Dieser Weg wird meistens durch Arbeitsgeräte versperrt, die dann erst beiseite geräumt werden müssen. Die ungünstige Anordnung der Absaugvorrichtung erschwert zusätzlich den Einsatz dieser Absaug- und Schutzhauben.

Der Erfindung liegt daher die Aufgabe zugrunde, eine Absaug- und Schutzhaube zu schaffen, die das Bedienungspersonal weitgehend vor dem Einatmen von Schleif- und Staubpartikeln schützt, und die so gestaltet ist, dass sie die zur schnellen Bearbeitung von Werkstücken erforderlichen Bewegungsabläufe nicht behindert. Die Absaug- und Schutzhaube soll darüber hinaus einfach aufgebaut und wirtschaftlich herstellbar sein.

Diese Aufgabe wird erfindungsgemäss dadurch gelöst, dass bei der Absaug- und Schutzhaube das Haubenteil körperseitig geschlossen ist, und der Absaugstützen zur offenen Seite hin gerichtet ist.

Bei einer Absaug- und Schutzhaube der oben genannten Art verhindert eine Scheibe, die die offene Seite des Haubenteils abdeckt und schwenkbar an der Haubenoberseite angebracht ist, dass bei grosser Staubentwicklung bei der Bearbeitung eines Werkstücks Staub nach aussen dringt und eingeatmet wird.

Es kann zusätzlich eine Absaugung eingeschaltet werden. Der Absaugstutzen der Schutzhaube weist dazu vorteilhaft ein Vierkanthohlprofil auf und ist in ein vorderes Teilstück, das mit dem Haubenteil verbunden ist, und ein hinteres Teilstück, das an eine Saugleitung angeschlossen ist, unterteilt, wobei das vordere Teilstück gegenüber dem hinteren kippbar angeordnet ist.

Über eine Halterung zwischen den beiden Teilstücken wird das vordere Teilstück des Absaugstutzens in einer gewünschten Kipposition festgehalten. Die Neigung des Haubenteils kann so den Bedürfnissen des Bearbeiters entsprechend eingestellt werden. Eine Faltenbalgmanschette, die zur Abdichtung die Enden der Teilstücke des Absaugstutzens im Bereich der Halterung formschlüssig umfasst, behindert die Neigung des Haubenteils nicht.

Über Bohrungen im vorderen Teilstück des Absaugstutzens, die unterhalb der Öffnung im Arbeitsboden sich befinden, werden Staub- und Schleifpartikel aus der Haube abgesaugt, grössere Teile, z.B. entfallenes Werkzeug, werden festgehalten. Die Öffnung im Arbeitsboden kann bei der Edelmetallbearbeitung durch eine Klappe verschlossen werden, damit kein hochwertiger Schleifstaub oder Metallpartikel über die Absaugleitung verlorengeht.

Die Gestaltung aus durchsichtigem Hartkunststoffmaterial macht die erfindungsgemässe Absaug- und Schutzhaube vollbereichsichtig. Klare Sicht auf das Werkstück ermöglicht auch die Sichtscheibe in der Haubenoberseite, die bei Kratzern oder im Laufe der Benutzung auftretender Trübung gegen eine neue ausgetauscht werden kann. Eine unter der Haubenoberseite installierte indirekte Beleuchtung sorgt für die optimale Ausleuchtung der Werkstücke.

Die erfindungsgemässe Absaug- und Schutzhaube ist, wie oben ausgeführt, durch ihre Gestaltung optimal den Anforderungen in einem zahntechnischen Labor angepasst. Sie gestattet die schnelle Bearbeitung der Werkstücke und deren Anpassung an das Modell. Während der Arbeit ist die Sicht auf das Werkstück nicht eingeschränkt.

Auch grössere Staubentwicklung kann durch die zugeschaltete Absaugung bewältigt werden, wobei die Abdeckscheibe die Haube nach aussen wirkungsvoll abschirmt. Atemwege und Lungen des Bedienungspersonals werden geschützt, und so die Gefahr einer Silikose oder gar eines Lungenkrebses vermindert.

Ein Ausführungsbeispiel der Erfindung ist in der Zeichnung dargestellt und wird im folgenden näher beschrieben. Es zeigen:

Figur 1 eine Ansicht der erfindungsgemässen Absaug- und Schutzhaube,

Figur 2 einen Schnitt durch die Absaug- und Schutzhaube gemäss Figur 1.

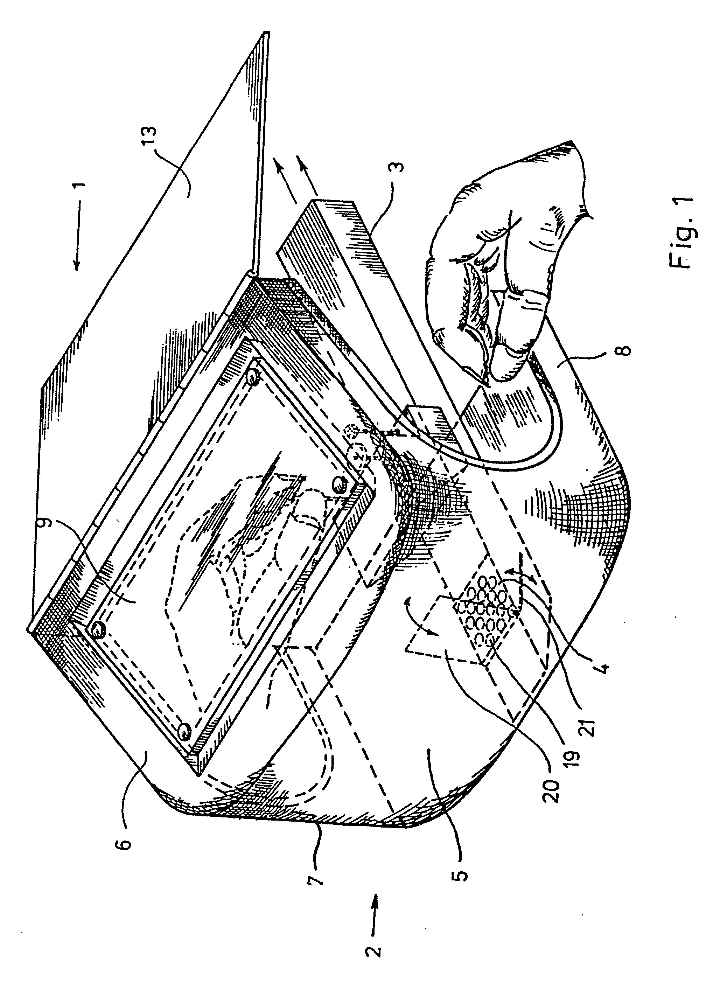

Wie Figur 1 zeigt, besteht die erfindungsgemässe Absaug- und Schutzhaube 1 im wesentlichen aus einem Haubenteil 2 und einem zur offenen Seite gerichteten Absaugstutzen 3, der über eine Öffnung 4 im Arbeitsboden 5 des Haubenteils an das Haubenteil 2 angeschlossen ist.

Das Haubenteil 2 setzt sich zusammen aus einer körperseitig geneigten Oberseite 6, die in ein senkrechtes Wandteil 7 übergeht und einem Arbeitsboden 5. Die Seitenränder des Haubenteils weisen zu beiden Seiten umlaufende Kragenteile 8 auf. Die Kantenbereiche des Haubenteils 2 sind abgerundet. Das Haubenteil 2 ist vorzugsweise aus durchsichtigem, kratzfestem Hartkunststoffmaterial, z.B. Acrylglas, hergestellt.

Die Oberseite des Haubenteils 2 weist eine rechteckige Vertiefung auf, in die eine Sichtscheibe 9 eingelassen ist. Die Sichtscheibe 9 ist über Schraub- oder Klemmverbindungen mit der Oberseite des Haubenteils verbunden, so dass sie bei Bedarf ausgetauscht werden kann.

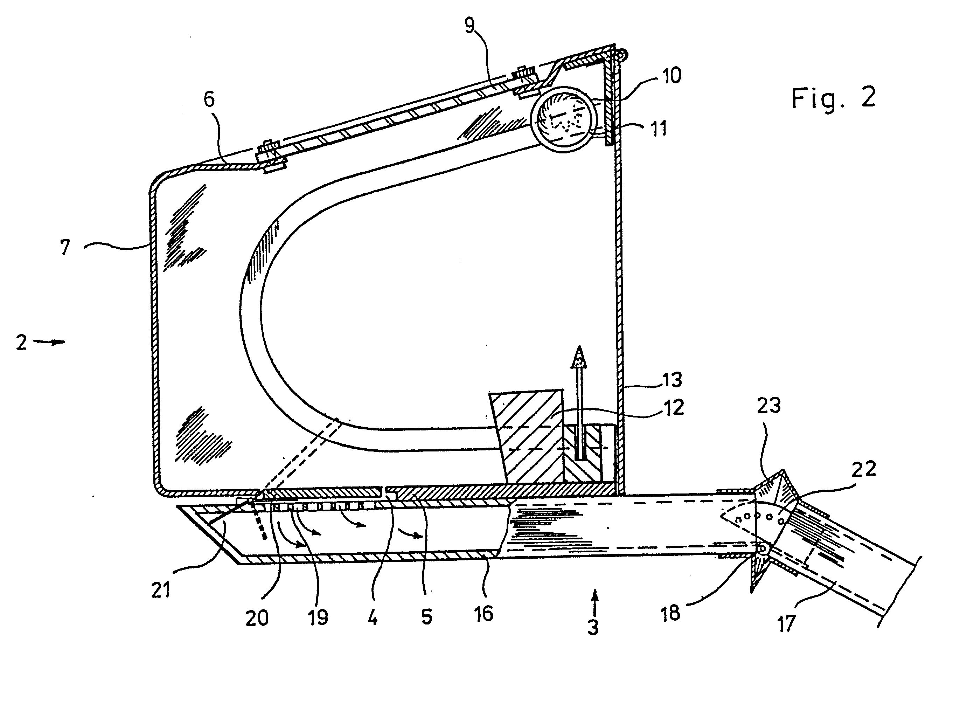

An der freien Längskante der Haubenoberseite 6 ist über Scharniere schwenkbar eine Scheibe 13 befestigt, die die offene Seite des Haubenteils, falls erforderlich, abdeckt. Die Scheibe 13 besteht vorzugsweise aus dem gleichen durchsichtigen Kunststoffmaterial wie das Haubenteil 2. Unterhalb der Längskante ist eine L-Profil-Leiste 10 mit einem Schenkel befestigt. Sie trägt, wie Figur 2 zeigt, eine Beleuchtungsvorrichtung 11.

Der Arbeitsboden 5 des Haubenteils 2 weist zur offenen Seite hin einen abgeschrägten Block 12 auf, auf dem ein Werkstück abgestützt werden kann. Der Stützblock 12 ist vorzugsweise aus Holz hergestellt. Hinter dem Stützblock 12 kann eine Halterung für Werkzeug angebracht sein. In dieser Position behindert das Werkzeug das Einbringen eines Werkstücks nicht und es ist dort jederzeit schnell erreichbar.

Der Absaugstutzen 3 besteht vorzugsweise aus einem Vierkanthohlprofil aus Leichtmetall. Er ist gemäss Figur 2 aus einem vorderen und einem hinteren Teilstück 16, 17 zusammengesetzt. Ein Scharnier 18 verbindet die beiden Teile miteinander. Das hintere Teilstück 17 ist abnehmbar an die Saugleitung z.B. eines Ventilators angeschlossen, die gleichzeitig auch als Halterung dient. Das vordere Teilstück 16 des Absaugstutzens 3 ist mit dem Arbeitsboden 5 des Haubenteils 2 verbunden. Es kann seitliche Bleche (nicht gezeigt) aufweisen, die den Arbeitsboden 5 des Haubenteils 2 unterstützen. Das vordere Teilstück 16 ist körperseitig zur Vermeidung von Verletzungen abgeschrägt. Im Bereich der Öffnung 4 im Arbeitsboden 5 weist es Bohrungen 19 auf, die als Absaugöffnungen dienen. Öffnung 4 und Bohrung 19 können durch eine bewegliche Klappe 20 verschlossen werden, die über einen Hebel 21 verschwenkbar gehalten ist. Eine Arretierung (nicht gezeigt) sorgt für den Halt der Klappe 20 in der geöffneten Position. Beim Schliessen der Klappe 20 kann ein Kontakt (nicht gezeigt) betätigt werden, der den Stromkreis des Ventilators unterbricht. Beim Arbeiten mit Edelmetall werden so mögliche Verluste ausgeschlossen. Durch das Scharnier 18 zwischen den beiden Teilstücken 16, 17 des Ansaugstutzens ist das Haubenteil 2 aus der Horizontalen nach unten kippbar. Durch eine Halterung 22 zwischen den beiden Teilstücken 16, 17 kann die Neigung des Haubenteils 2 stufenweise oder kontinuierlich verändert werden. In der Figur 3 sind Rastscheiben angedeutet, die eine stufenweise Einstellung der Position des Haubenteils 2 ermöglichen. Solche Halterungen sind bekannt, und der Fachmann wird die für den Gebrauch am besten geeignete Ausführung auswählen.

Die Öffnung zwischen den beiden Teilstücken des Absaugstutzens 3 verschliesst eine Faltenbalgmanschette 23, die die Enden der Teilstücke 16, 17 im Bereich der Halterung formschlüssig umfasst. Durch den Faltenbalg wird die freie Beweglichkeit des vorderen Teilstücks 16 mit dem Haubenteil 2 gewährleistet, ohne die Saugleistung des Absaugstutzens zu beeinträchtigen.

**Patentansprüche**

1. Absaug- und Schutzhaube (1), besonders für den Einsatz in einem zahntechnischen Labor, mit einem Haubenteil (2), dessen geneigte Oberseite (6) eine Sichtscheibe (9) aufweist und über ein senkrechtes Wandteil (7) mit einem Arbeitsboden (5) verbunden ist, und dessen Seitenränder (8) kragenförmig ausgebildet sind, und einem Absaugstutzen (3), der über eine Öffnung (4) im Arbeitsboden an das Haubenteil angeschlossen ist, dadurch gekennzeichnet, dass das Haubenteil (2) körperseitig geschlossen ist und der Absaugstutzen (3) zur offenen Seite hin gerichtet ist.

2. Absaug- und Schutzhaube nach Anspruch 1, gekennzeichnet durch eine die offene Seite des Haubenteils (2) abdeckende Scheibe (13), die schwenkbar an der Haubenoberseite (6) angebracht ist.

3. Absaug- und Schutzhaube nach Anspruch 1, dadurch gekennzeichnet, dass das Haubenteil (2) aus durchsichtigem Hartkunststoffmaterial besteht.

4. Absaug- und Schutzhaube nach Anspruch 1, dadurch gekennzeichnet, dass die Sichtscheibe (9) auf der Haubenteiloberseite (6) auswechselbar und zum Körper hin geneigt ist.

5. Absaug- und Schutzhaube nach Anspruch 1, dadurch gekennzeichnet, dass der Absaugstutzen (3) ein Vierkanthohlprofil aufweist.

6. Absaug- und Schutzhaube nach Anspruch 5, dadurch gekennzeichnet, dass der Absaugstutzen (3) aus einem vorderen und einem hinteren Teilstück (16, 17) besteht, wobei das vordere Teilstück (16) gegenüber dem hinteren (17) kippbar angeordnet ist.

7. Absaug- und Schutzhaube nach den Ansprüchen 5 und 6, gekennzeichnet durch eine Halterung (22), die das vordere Teilstück (16) des Absaugstutzens in einer gewünschten Position festhält.

8. Absaug- und Schutzhaube nach einem der Ansprüche 6 und 7, gekennzeichnet durch eine die Enden der Teilstücke des Absaugstutzens (3) im Bereich der Halterung (22) formschlüssig umfassende Faltenbalgmanschette (23).

9. Absaug- und Schutzhaube nach einem der Ansprüche 6 bis 8, dadurch gekennzeichnet, dass das vordere Teilstück (16) des Absaugstutzens im Bereich der Öffnung (4) im Arbeitsboden Bohrungen (19) aufweist.

10. Absaug- und Schutzhaube nach Anspruch 1, gekennzeichnet durch eine über einen Hebel bewegliche Klappe (20) zum Verschluss der Öffnung (4) im Arbeitsboden.

11. Absaug- und Schutzhaube nach Anspruch 1, gekennzeichnet durch eine Beleuchtungsvorrichtung (1) unter der Oberseite (6) des Haubenteils.

## Claims

1. A suction and protector hood (1), especially for use in a dental technical laboratory, comprising a hood section (2) the inclined upper side (6) of which is provided with a window shield (9) and joined to a working platform (5) through a vertical wall portion, and the side edges (8) of which are formed like a collar; and a suction nozzle (3) which is connected to the hood section through an opening (4) in the working platform, characterized in that the hood section (2) is closed on the side of the (operator's) body, and the suction nozzle (3) is directed toward the open side.

2. The suction and protector hood according to claim 1, characterized by a pane (13) covering the open side of the hood section (2) and being pivotally mounted to the upper side (6) of the hood.

3. The suction and protector hood according to claim 1, characterized in that the hood section (2) is formed of a transparent hard plastics material.

4. The suction and protector hood according to claim 1, characterized in that the window shield (9) is mounted interchangeably on the upper side (6) of the hood section and inclined toward the (operator's) body.

5. The suction and protector hood according to claim 1, characterized in that the suction nozzle (3) comprises a hollow square section.

6. The suction and protector hood according to claim 5, characterized in that the suction nozzle (3) comprises a front and a rear portion (16, 17), with the front portion (16) being arranged so as to be adapted to be folded relative to the rear portion (17).

7. The suction and protector hood according to claims 5 and 6, characterized by mounting means (22) for retaining the front portion (16) of the suction nozzle in a desired position.

8. The suction and protector hood according to any one of claims 6 and 7, characterized by a bellows-type collar (23) enclosing the ends of the portions of the suction nozzle (3) with positive engagement in the region of the mounting means (22).

9. The suction and protector hood according to any one of claims 6 to 8, characterized in that the front portion (16) of the suction nozzle includes (bored) apertures (19) in the region of the opening (4) formed in the working platform.

10. The suction and protector hood according to claim 1, characterized by a door (20) adapted to be moved by means of a lever, for closing the opening (4) formed in the working platform.

11. The suction and protector hood according to claim 1, characterized by an illuminating device (11) disposed below the upper side (6) of the hood section.

## Revendications

1. Hotte d'aspiration et de protection (1), notamment pour un laboratoire de confection de prothèses dentaires, comportant une partie hotte (2) dont le côté supérieur incliné (6) présente une vitre d'observation (9) et est relié, par une partie paroi verticale (7), à un fond (5) utilisable comme surface de travail, et dont les parois latérales (8) sont réalisées en forme de col, cette hotte comportant en outre une tubulure d'aspiration (3) qui est raccordée à la partie hotte par une ouverture (4) dans le fond, caractérisée en ce que la partie hotte (2) est fermée côté corps, et en ce que la tubulure d'aspiration (3) est dirigée vers le côté ouvert.

2. Hotte d'aspiration et de protection selon la revendication 1, caractérisée par une plaque (13) masquant le côté ouvert de la partie hotte (2), cette plaque étant agencée à pivotement sur le côté supérieur (6) de la hotte.

3. Hotte d'aspiration et de protection selon la revendication 1, caractérisée en ce que la partie hotte (2) est en matière plastique dure, transparente.

4. Hotte d'aspiration et de protection selon la revendication 1, caractérisée en ce que la vitre d'observation (9) sur le côté supérieure (6) de la partie hotte peut être remplacée et est inclinée vers le corps.

5. Hotte d'aspiration et de protection selon la revendication 1, caractérisée en ce que la tubulure d'aspiration (3) présente un profilé creux à section rectangulaire.

6. Hotte d'aspiration et de protection selon la revendication 5, caractérisée en ce que la tubulure d'aspiration (3) est constituée par une pièce avant et par une pièce arrière (16, 17), la pièce avant (16) étant agencée de manière à pouvoir être basculée par rapport à la pièce arrière (17).

7. Hotte d'aspiration et de protection selon les revendications 5 et 6, caractérisée par un organe de maintien (22) qui maintient la pièce avant (16) de la tubulure d'aspiration à une position désirée.

8. Hotte d'aspiration et de protection selon l'une des revendications 6 et 7, caractérisée par une manchette à soufflet (23) entourant, en s'y conjuguant, les extrémités des pièces de la tubulure d'aspiration (3), dans la région de l'organe de maintien (22).

9. Hotte d'aspiration et de protection selon l'une des revendicatios 6 à 8, caractérisée en ce que la pièce avant (16) de la tubulure d'aspiration présente des trous (19) dans la région de l'ouverture (4) dans le fond.

10. Hotte d'aspiration et de protection selon la revendication 1, caractérisée par un volet (20) pouvant être déplacé au moyen d'un levier, pour fermer l'ouverture (4) dans le fond.

11. Hotte d'aspiration et de protection selon la revendication 1, caractérisée par un dispositif d'éclairage (11) en dessous du côté supérieure (6) de la partie hotte.

Fig. 1

Fig. 2

0 093 257